# EUROPÄISCHE PATENTSCHRIFT

(11) **EP 1 913 247 B1**
(45) Veröffentlichungstag und Bekanntmachung des Hinweises auf die Patenterteilung: **21.04.2010**
(21) Anmeldenummer: 06777850.6
(22) Anmeldetag: 20.07.2006
(51) Int. Cl.: F02D 41/12, F02D 17/02

(54) **VERFAHREN UND VORRICHTUNG ZUM BETREIBEN EINER BRENNKRAFTMASCHINE**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 03.08.2005 DE 102005036441
(43) Veröffentlichungstag der Anmeldung: 23.04.2008
(73) Patentinhaber: ROBERT BOSCH GMBH, 70442 Stuttgart (DE)
(72) Erfinder: HARTMANN, Dirk, 70469 Stuttgart (DE); MEZGER, Werner, 74246 Eberstadt (DE); ROTH, Andreas, 75417 Muehlacker-Lomersheim (DE); RAPPOLD, Juergen, 74360 Ilsfeld-Auenstein (DE); MALLEBREIN, Georg, 70825 Korntal-Muenchingen (DE); POERTNER, Nikolas, 70599 Stuttgart (DE); BARBIER, Henri, 71701 Schwieberdingen (DE); FECHT, Ingo, 71634 Ludwigsburg (DE)
(86) Internationale Anmeldenummer: PCT/EP2006/064437
(87) Internationale Veröffentlichungsnummer: WO 2007/014861

(56) Entgegenhaltungen:
- JP-A- 2004 332 618
- US-A- 4 977 876
- US-A1- 2004 163 866
- US-A1- 2004 237 935

## Beschreibung

### Stand der Technik

Die Erfindung geht von einem Verfahren und von einer Vorrichtung zum Betreiben einer Brennkraftmaschine, insbesondere in einem unbefeuerten Zustand, nach der Gattung der unabhängigen Ansprüche aus.

Dabei ist es bereits bekannt, dass eine Motorsteuerung der Brennkraftmaschine während des Betriebs der Brennkraftmaschine eine Verzögerungsanforderung beispielsweise aufgrund der Betätigung eines Bremspedals durch den Fahrer eines von der Brennkraftmaschine angetriebenen Fahrzeugs oder von einer Fahrdynamikregelung empfängt, die durch den Motor bzw. die Brennkraftmaschine umgesetzt werden soll.

### Vorteile der Erfindung

Das erfindungsgemäße Verfahren und die erfindungsgemäße Vorrichtung zum Betreiben einer Brennkraftmaschine, insbesondere in einem unbefeuerten Zustand, mit den Merkmalen der unabhängigen Ansprüche haben demgegenüber den Vorteil, dass abhängig von der Größe der Verzögerungsanforderung zwischen einem ersten Betriebszustand und einem zweiten Betriebszustand der Brennkraftmaschine umgeschaltet wird, wobei sich der erste Betriebszustand und der zweite Betriebszustand in der Anzahl der Zylinder unterscheiden, deren Ladungswechsel ausgesetzt ist. Auf diese Weise lässt sich die Umsetzung unterschiedlicher Verzögerungsanforderungen durch eine unterschiedliche Anzahl von Zylindern der Brennkraftmaschine unterstützen, deren Ladungswechsel ausgesetzt ist. Unterschiedliche Verzögerungsanforderungen lassen sich auf diese Weise besser und schneller umsetzen, so dass die Sicherheit eines von der Brennkraftmaschine angetriebenen Fahrzeugs erhöht wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die Anzahl der Zylinder, deren Ladungswechsel ausgesetzt ist, im ersten Betriebszustand größer als im zweiten Betriebszustand gewählt wird. Auf diese Weise kann der zweite Betriebszustand zur Umsetzung einer größeren Verzögerungsanforderung verwendet werden als der erste Betriebszustand.

Umgekehrt kann der zweite Betriebszustand zur Umsetzung einer kleineren Verzögerungsanforderung verwendet werden als der erste Betriebszustand, wenn die Anzahl der Zylinder, deren Ladungswechsel ausgesetzt ist, im ersten Betriebszustand kleiner als im zweiten Betriebszustand gewählt wird.

Dabei kann es in vorteilhafter Weise vorgesehen sein, dass im ersten Betriebszustand der Ladungswechsel der Hälfte der Zylinder ausgesetzt wird. Dies ermöglicht es, im Falle einer Brennkraftmaschine mit einer geradzahligen Anzahl an Zylinderbänken den Ladungswechsel bei der Hälfte der Zylinderbänke komplett auszusetzen, was besonders einfach realisierbar ist.

Ein weiterer Vorteil ergibt sich, wenn im ersten Betriebszustand der Ladungswechsel jedes zweiten Zylinders in der Zündreihenfolge ausgesetzt wird. Auf diese Weise wird auch im ersten Betriebszustand ein ruhiger Motorlauf gewährleistet.

Vorteilhaft ist weiterhin, wenn im zweiten Betriebszustand der Ladungswechsel bei allen Zylindern aktiviert wird. Auf diese Weise lässt sich auch der zweite Betriebszustand besonders einfach realisieren und ermöglicht ebenfalls einen ruhigen Motorlauf.

Als Kriterium für die Umschaltung vom ersten Betriebszustand in den zweiten Betriebszustand eignet sich in besonders einfacher Weise die Verwendung eines ersten vorgegebenen Schwellwertes, der für die genannte Umschaltung von der Verzögerungsanforderung überschritten werden muss.

Als Kriterium für die Umschaltung vom zweiten Betriebszustand in den ersten Betriebszustand eignet sich in besonderer Weise die Verwendung eines zweiten vorgegebenen Schwellwertes, der von der Verzögerungsanforderung unterschritten werden muss.

Dabei kann in einfachster Weise der erste vorgegebene Schwellwert und der zweite vorgegebene Schwellwert gleich groß gewählt werden.

Um ein zu häufiges Umschalten zwischen dem ersten Betriebszustand und dem zweiten Betriebszustand zu verhindern, kann eine Hysterese dadurch eingestellt werden, dass der erste vorgegebene Schwellwert und der zweite vorgegebene Schwellwert unterschiedlich groß gewählt werden, wobei der erste vorgegebene Schwellwert größer als der zweite vorgegebene Schwellwert gewählt werden sollte.

### Zeichnung

Ein Ausführungsbeispiel der Erfindung ist in der Zeichnung dargestellt und in der nachfolgenden Beschreibung näher erläutert. Es zeigen:
- Figur 1: ein Blockschaltbild einer Brennkraftmaschine mit zwei Zylinderbänken und
- Figur 2: ein Funktionsdiagramm zur Veränderung des Ladungswechselzustandes mindestens eines Zylinders der Brennkraftmaschine abhängig von einer Anforderung.

### Beschreibung des Ausführungsbeispiels

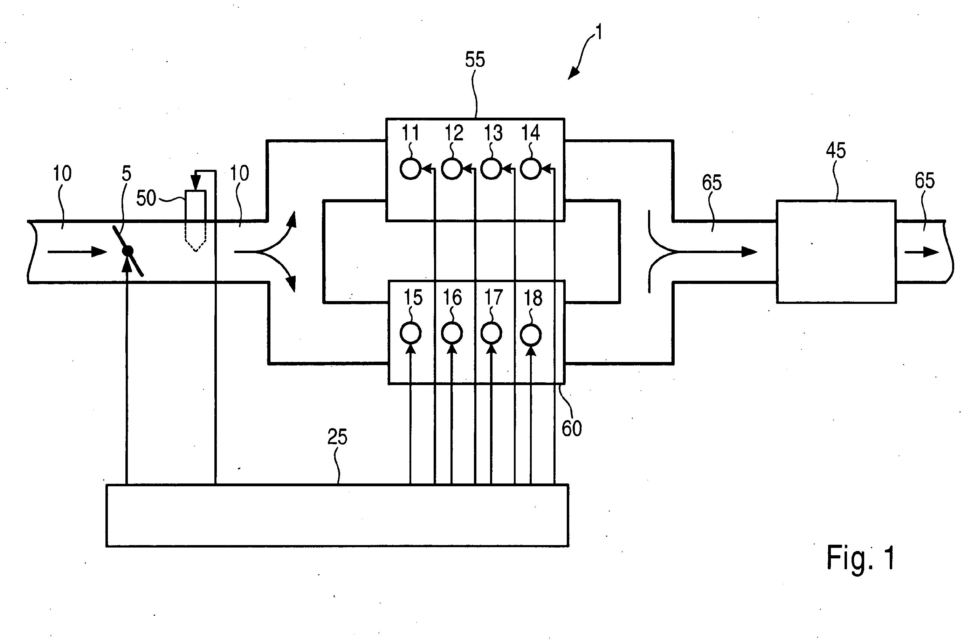

In Figur 1 kennzeichnet 1 eine Brennkraftmaschine, die beispielsweise ein Fahrzeug antreibt. Die Brennkraftmaschine 1 kann beispielsweise als Ottomotor oder als Dieselmotor ausgebildet sein. Die Brennkraftmaschine 1 umfasst in diesem Beispiel eine geradzahlige Anzahl n an Zylinderbänken, wobei im Beispiel nach Figur 1 n gleich 2 ist. Alternativ lässt sich die Erfindung aber auch mit einer ungeradzahligen Anzahl an Zylinderbänken realisieren, beispielsweise auch nur mit einer einzigen. Jede Zylinderbank im vorliegenden Beispiel umfasst die gleiche Anzahl an Zylindern. So umfasst die Brennkraftmaschine 1 gemäß dem Beispiel nach Figur 1 eine erste Zylinderbank 55 mit einem ersten Zylinder 11, einem zweiten Zylinder 12, einem dritten Zylinder 13 und einem vierten Zylinder 14. Ferner umfasst die Brennkraftmaschine 1 gemäß Figur 1 eine zweite Zylinderbank 60 mit einem fünften Zylinder 15, einem sechsten Zylinder 16, einem siebten Zylinder 17 und einem achten Zylinder 18. Den Zylindern 11, ..., 18 der beiden Zylinderbänke 55, 60 wird über eine Luftzufuhr 10 Frischluft zugeführt. In der Luftzufuhr 10 ist ein Stellglied 5 zur Beeinflussung der den Zylindern 11, ..., 18 zugeführten Luftmenge angeordnet. Diese Luftmenge variiert dabei abhängig von der Stellung oder Position oder dem Öffnungswinkel oder Öffnungsgrad des Stellgliedes 5. Im Folgenden wird beispielhaft angenommen, dass das Stellglied 5 als Drosselklappe ausgebildet ist. Die Strömungsrichtung der Luft in der Luftzufuhr 10 ist in Figur 1 durch Pfeile gekennzeichnet. Die Position der Drosselklappe bzw. der am Öffnungswinkel wird von einer Steuerung 25 in dem Fachmann bekannter Weise beispielsweise abhängig von der Betätigung eines in Figur 1 nicht dargestellten Fahrpedals oder abhängig von der Anforderung eines anderen in Figur 1 nicht dargestellten Fahrzeugsystems, wie beispielsweise eines Antiblockiersystems, einer Antriebschlupfregelung, einer Fahrdynamikregelung, einem Fahrgeschwindigkeitsregler oder dergleichen angesteuert. Stromab der Drosselklappe 5 wird über ein Einspritzventil 50 Kraftstoff in die Luftzufuhr 10 eingespritzt, wobei die Ansteuerung des Einspritzventils 50 und damit die Kraftstoffzumessung ebenfalls von der Steuerung 25 in dem Fachmann bekannter Weise beispielsweise zur Einstellung eines vorgegebenen Luft-/Kraftstoffgemischverhältnisses eingestellt wird. Alternativ kann die Kraftstoffeinspritzung auch stromauf der Drosselklappe 5 in die Luftzufuhr 10 oder direkt in die Brennräume der Zylinder 11, ..., 18 erfolgen. Ferner ist es gemäß Figur 1 vorgesehen, den Ventiltrieb der Zylinder 11, ..., 18 und damit deren Einlass- und Auslassventile seitens der Motorsteuerung 25 in dem Fachmann bekannter Weise mittels einer vollvariablen Ventilsteuerung anzusteuern. Alternativ kann dieser Ventiltrieb auch unter Verwendung von Nockenwellen in dem Fachmann bekannter Weise eingestellt werden. Das bei der Verbrennung des Luft-/Kraftstoffgemisches in den Brennräumen der Zylindern 11, ..., 18 gebildete Abgas wird über die Auslassventile der Zylinder 11, ..., 18 in einen Abgasstrang 65 ausgestoßen. Die Strömungsrichtung des Abgases im Abgasstrang 65 ist in Figur 1 ebenfalls durch Pfeile gekennzeichnet. Dabei ist im Abgasstrang 65 optional eine Abgasnachbehandlungsvorrichtung 45 angeordnet, beispielsweise in Form eines Katalysators, um die Emission unerwünschter Schadstoffe durch Konversion möglichst zu vermeiden.

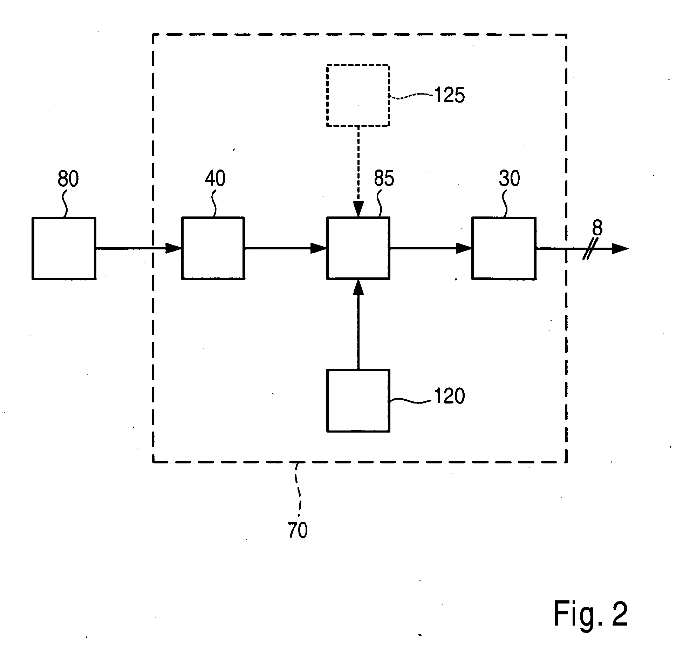

In Figur 2 ist ein Funktionsdiagramm dargestellt und mit dem Bezugszeichen 70 gekennzeichnet, mit dessen Hilfe der Ladungswechselzustand mindestens eines der Zylinder 11, 12, ..., 18 der Brennkraflmaschine in Abhängigkeit von einer empfangenen Anforderung verändert wird. Das Funktionsdiagramm 70 kann dabei beispielsweise software- und/oder hardwaremäßig in der Motorsteuerung 25 implementiert sein. Das Funktionsdiagramm 70 umfasst eine Empfangseinheit 40 zum Empfang einer Anforderung von einer außerhalb des Funktionsdiagramms 70 gelegenen Anforderungserzeugungseinheit 80. Eine solche Anforderung kann beispielsweise eine Anforderung zur Veränderung des Temperaturgradienten der Abgasnachbehandlungsvornchtung 45 sein. Eine solche Anforderung kann dabei von der Motorsteuerung 25 erzeugt werden. Zu diesem Zweck vergleicht die Motorsteuerung 25 beispielsweise eine Isttemperatur des Katalysators 45 mit einer Solltemperatur des Katalysators 45 und leitet aus dieser Abweichung eine Anforderung zur Veränderung des zeitlichen Temperaturgradienten des Katalysators 45 ab. So kann beispielsweise bei einer Unterschreitung der Solltemperatur des Katalysators um mehr als einen vorgegebenen Wert durch die Isttemperatur des Katalysators von der Motorsteuerung 25 eine Erhöhung des Temperaturgradienten angefordert werden. Bei Überschreiten der Solltemperatur des Katalysators um mehr als einen vorgegebenen Wert durch die Isttemperatur des Katalysators kann die Motorsteuerung 25 umgekehrt eine Verringerung des Temperaturgradienten des Katalysators 45 anfordern. Die Anforderung an die Veränderung des Temperaturgradienten wird dabei von der Anforderungserzeugungseinheit 80 vorgegeben, die ebenfalls in der Motorsteuerung 25 software- und/oder hardwaremäßig implementiert sein kann. Ein anderes Beispiel für eine Anforderung ist eine Verzögerungsanforderung zur Verzögerung des von der Brennkraftmaschine 1 angetriebenen Fahrzeugs. Eine solche Verzögerungsanforderung empfängt die Steuerung 25 beispielsweise aufgrund einer Betätigung eines Bremspedals durch den Fahrer oder als Verzögerungsanforderung eines Fahrzeugsystems, wie beispielsweise eines Antiblockiersystems, einer Antriebschlupfregelung, einer Fahrdynamikregelung, usw. In diesem Fall stellt die Anforderungserzeugungseinheit 80 das entsprechende Fahrzeugsystem oder das Bremspedalmodul dar.

Die Empfangseinheit 40 empfängt von der Anforderungserzeugungseinheit 80 die beschriebene Anforderung und leitet sie an eine Umsetzeinheit 85 im Funktionsdiagramm weiter. Die Umsetzeinheit 85 setzt die empfangene Anforderung in eine Anforderung an den Ladungswechselzustand der Zylinder 11, 12, ..., 18 um und leitet diese Anforderung an Mittel 30 zur Veränderung des Ladungswechselzustandes der Zylinder 11, 12, ..., 18 weiter. Die Mittel 30 umfassen dabei eine Aktuatorik, die den Ventiltrieb der Einlass- und/oder Auslassventile jedes Zylinders 11, 12, ..., 18 gemäß der von der Umsetzeinheit 85 gelieferten Anforderung einstellen. Dabei können die Einlass- und/oder Auslassventile jedes Zylinders 11, 12, ..., 18 durch die Mittel 30 individuell eingestellt, d. h. geöffnet oder geschlossen werden. Dabei umfasst jeder Zylinder 11, ..., 18 ein oder mehrere Einlassventile und ein oder mehrere Auslassventile. Durch die Mittel 30 können sämtliche Einlassventile und/oder sämtliche Auslassventile eines jeden Zylinders 11,12,..., 18 dauerhaft geschlossen werden, sodass der Ladungswechsel über den entsprechenden Zylinder für diese Dauer ausgesetzt bzw. deaktiviert ist. Da jeder Zylinder 11, ..., 18 individuell in der beschriebenen Weise angesteuert werden kann, zeigt die Figur 2 acht Ausgänge der Mittel 30. Eine Veränderung des Ladungswechselzustandes mindestens eines der Zylinder 11, ..., 18 ergibt sich somit dadurch, dass der Ladungswechsel über den mindestens einen Zylinder 11, ..., 18 ausgehend von einem aktivierten Zustand durch dauerhaftes Schließen sämtlicher seiner Einlassventile und/oder sämtlicher seiner Auslassventile ausgesetzt wird. Umgekehrt lässt sich der Ladungswechselzustand des mindestens einen Zylinders 11, ..., 18 dadurch verändern, dass der Ladungswechsel über den mindestens einen Zylinder 11, ..., 18 ausgehend vom ausgesetzten Zustand wieder aktiviert wird, indem die Einlass- und/oder Auslassventile des mindestens einen Zylinders 11, ..., 18 zur Durchführung des Ladungswechsels in herkömmlicher Weise abwechselnd je nach Zylindertakt geöffnet und geschlossen werden.

In einer vorteilhaften Ausführungsform werden hinsichtlich des Ladungswechselzustandes der Zylinder 11, ..., 18 zwei Betriebszustände der Brennkraftmaschine 1 unterschieden. In einem ersten Betriebszustand wird der Ladungswechsel über die Hälfte der Zylinder 11, ..., 18 durch dauerhaftes Schließen ihrer Einlass- und/oder Auslassventile augesetzt. Dabei kann entweder der Ladungswechsel über sämtliche Zylinder einer der beiden Zylinderbänke 55, 60a ausgesetzt werden, wohingegen der Ladungswechsel über sämtliche Zylinder der anderen beiden Zylinderbänke 55, 60 aktiviert ist. Alternativ kann auch die Hälfte der Zylinder der ersten Zylinderbank 55 und die Hälfte der Zylinder der zweiten Zylinderbank 60 oder generell die Hälfte der Zylinder unabhängig davon, auf welcher Zylinderbank sie sich befinden hinsichtlich des Ladungswechsel deaktiviert sein, wohingegen der Ladungswechsel über die übrigen Zylinder aktiviert ist. Generell und auch im Falle einer ungeraden Anzahl an Zylinderbänken kommt es lediglich darauf an, dass ein Teil, beispielsweise die Hälfte, aller Zylinder der Brennkraftmaschine 1 hinsichtlich des Ladungswechsels deaktiviert wird und der andere Teil aller Zylinder der Brennkraftmaschine 1 hinsichtlich des Ladungswechsels aktiviert ist. Ist die Zündreihenfolge der Zylinder 11, ..., 18 beispielsweise wie folgt:
Erster Zylinder 11, fünfter Zylinder 16, zweiter Zylinder 12, sechster Zylinder 16, dritter Zylinder 13, siebter Zylinder 17, vierter Zylinder 14, achter Zylinder 18.

Dabei kann es auch vorgesehen sein, jeden zweiten Zylinder der Zündreihenfolge vom Ladungswechsel auszuschließen, unabhängig davon, auf welcher Zylinderbank er sich befindet, und den Ladungswechsel über die übrigen Zylinder zu aktivieren. Im beschriebenen Beispiel würde beispielsweise für den Fall, dass sämtliche Zylinder 11, 12, 13, 14 der ersten Zylinderbank 55 vom Ladungswechsel ausgeschlossen werden und der Ladungswechsel über sämtliche Zylinder 15,16,17,18 der zweiten Zylinderbank 60 aktiviert ist genau dazu führen, dass jeder zweite Zylinder in der Zündreihenfolge vom Ladungswechsel ausgeschlossen ist, wohingegen die übrigen Zylinder in der Zündreihenfolge einen Ladungswechsel aufweisen. Auf diese Weise wird ein möglichst ruhiger Motorbetrieb trotz des bei der Hälfte der Zylinder ausgesetzten Ladungswechsels bewirkt.

In einem zweiten Betriebszustand sollen alle Zylinder 11, ..., 18 hinsichtlich des Ladungswechsels aktiviert sein.

Die Veränderung des Ladungswechselzustandes der Zylinder 11, ..., 18 erfolgt nun einfach durch Umschaltung zwischen dem ersten Betriebszustand und dem zweiten Betriebszustand. Der erste Betriebszustand wird dabei auch als Halbmotorbetrieb und der zweite Betriebszustand auch als Vollmotorbetrieb bezeichnet. Diese Umschaltung zwischen den beiden Betriebszuständen kann sowohl im befeuerten wie auch im unbefeuerten Betrieb der Brennkraftmaschine 1 erfolgen. Im unbefeuerten Betrieb ist dabei die Kraftstoffeinspritzung über das Einspritzventil 50 dauerhaft ausgeblendet im Gegensatz zum befeuerten Betrieb, während dem regelmäßig Kraftstoff eingespritzt wird. Der befeuerte Betrieb der Brennkraftmaschine 1 kennzeichnet beispielsweise einen Zugbetrieb und der unbefeuerte Betrieb liegt beispielsweise in einem Schubbetrieb der Brennkraftmaschine 1 vor. Der unbefeuerte Schubbetrieb der Brennkraftmaschine 1 wird auch als Schubabschaltung bezeichnet, d. h. die betroffenen Einspritzventile aller Zylinder sind geschlossen.

Im Folgenden soll beispielhaft davon ausgegangen werden, dass die Umschaltung zwischen dem ersten Betriebszustand und dem zweiten Betriebszustand im unbefeuerten Betrieb der Brennkraftmaschine 1, also beispielsweise während Schubabschaltung erfolgt.

Im Folgenden wird angenommen, dass die Anforderungserzeugungseinheit 80 eine Verzögerungsanforderung abgibt, die von der Empfangseinheit 40 empfangen wird und an die Umsetzeinheit 85 weitergeleitet wird Die Umsetzeinheit 85 erzeugt eine Anforderung zur Einstellung des ersten Betriebszustandes oder des zweiten Betriebszustandes in Abhängigkeit von der Größe der empfangenen Verzögerungsanforderung. Dabei reicht es prinzipiell aus, wenn sich der erste Betriebszustand und der zweite Betriebszustand in der Anzahl der Zylinder 11, 12, ..., 18 unterscheiden, deren Ladungswechsel ausgesetzt ist. Dabei sei der Einfachheit halber angenommen, dass die Anzahl der Zylinder 11, 12, ..., 18, deren Ladungswechsel ausgesetzt ist, im ersten Betriebszustand größer als im zweiten Betriebszustand gewählt wird. Gemäß einem einfachen, die Allgemeinheit nicht beschränkenden Ausführungsbeispiel soll angenommen werden, dass im ersten Betriebszustand der Ladungswechsel der Hälfte der Zylinder 11, 12, ..., 18 gemäß dem zuvor beschriebenen Halbmotorbetrieb ausgesetzt wird, wobei vorteilhafter Weise und zur Gewährleistung eines möglichst ruhigen Motorlaufs der Ladungswechsel jedes zweiten Zylinders in der Zündreihenfolge ausgesetzt werden soll. Im zweiten Betriebszustand soll dann der Einfachheit halber in diesem Beispiel der Ladungswechsel bei allen Zylindern 11, ..., 18 aktiviert sein. Im Funktionsdiagramm 70 ist ein erster Festwertspeicher 120 und optional ein zweiter Festwertspeicher 125 vorgesehen. Im ersten Festwertspeicher 120 ist ein erster vorgegebener Schwellwert abgelegt. Im zweiten Festwertspeicher 125 ist ein zweiter vorgegebener Schwellwert abgelegt. Die Umsetzeinheit 85 prüft nun, ob die Größe der empfangenen Verzögerungsanforderung über dem ersten vorgegebenen Schwellwert liegt. In diesem Fall veranlasst die Umsetzeinheit 85 die Mittel 30 zur Umschaltung vom ersten Betriebszustand in den zweiten Betriebszustand. Liegt hingegen die Größe der empfangenen Verzögerungsanforderung unter dem zweiten vorgegebenen Schwellwert, so veranlasst die Umsetzeinheit 85 die Mittel 30 zur Umschaltung vom zweiten Betriebszustand in den ersten Betriebszustand. Der Einfachheit halber kann der erste vorgegebene Schwellwert und der zweite vorgegebene Schwellwert gleich groß gewählt werden. In diesem Fall ist der zweite Festwertspeicher 125 entbehrlich. Zur Realisierung einer Hysterese und damit zur Verhinderung eines zu häufigen aufeinander folgenden Umschaltens zwischen dem ersten Betriebszustand und dem zweiten Betriebszustand ist es jedoch sinnvoll, den ersten vorgegebenen Schwellwert und den zweiten vorgegebenen Schwellwert unterschiedlich groß zu wählen, so dass in diesem Fall sowohl der erste Festwertspeicher 120 zur Speicherung des ersten vorgegebenen Schwellwertes als auch der zweite Festwertspeicher 125 zur Speicherung des zweiten vorgegebenen Schwellwertes in dem Funktionsdiagramm 70 vorgesehen sind. Die beiden Festwertspeicher 120, 125 können dabei in einem gemeinsamen Speicherbaustein integriert sein. Dabei sollte der erste vorgegebene Schwellwert größer als der zweite vorgegebene Schwellwert gewählt werden. Der erste vorgegebene Schwellwert und der zweite vorgegebene Schwellwert können beispielsweise auf einem Prüfstand geeignet appliziert werden, um durch die beiden Betriebszustände der Brennkraftmaschine die möglichen Verzögerungsanforderungen möglichst vollständig umsetzen zu können. Bei der Umschaltung vom Halbmotorbetrieb in den Vollmotorbetrieb steigen die Ladungswechselverluste der Brennkraftmaschine 1 an und das Kupplungsmoment sinkt ab. Dadurch wird eine im Vergleich zum Halbmotorbetrieb größere Fahrzeugverzögerung im Vollmotorbetrieb erreicht. Durch Umschaltung vom Vollmotorbetrieb in den Halbmotorbetrieb sinken die Ladungswechselverluste der Brennkraftmaschine 1 ab und das Kupplungsmoment steigt an. Dies führt zu einer im Vergleich zum Vollmotorbetrieb geringeren Fahrzeugverzögerung im Halbmotorbetrieb.

Die Aussetzung des Ladungswechsels über den mindestens einen Zylinder 11, 12, ..., 18 erfolgt durch dauerhaftes Schließen seiner Einlass- und/oder Auslassventile oder mit anderen Worten durch Deaktivierung seines Ventiltriebs auf Einlass- und/oder Auslassseite. Die Aktivierung des Ladungswechsels über den mindestens einen Zylinder 11, 12, ..., 18 erfolgt durch Betrieb der Einlass- und/oder Auslassventile dieses mindestens einen Zylinders 11, 12, ..., 18 in herkömmlicher und oben beschriebener Weise, die mit anderen Worten auch als Aktivierung des Ventiltriebs dieses mindestens einen Zylinders auf Einlass- und/oder Auslassseite bezeichnet wird.

Das beschriebene Verfahren eignet sich besonders im Schubbetrieb bei Schubabschaltung also im unbefeuerten Betrieb der Brennkraftmaschine 1.

## Patentansprüche

1. Verfahren zum Betreiben einer Brennkraftmaschine (1), insbesondere in einem unbefeuerten Zustand, wobei eine Verzögerungsanforderung empfangen wird, **dadurch gekennzeichnet, dass** abhängig von der Größe der Verzögerungsanforderung zwischen einem ersten Betriebszustand und einem zweiten Betriebszustand der Brennkraftmaschine (1) umgeschaltet wird, wobei sich der erste Betriebszustand und der zweite Betriebszustand in der Anzahl der Zylinder (11, 12, ..., 18) unterscheiden, deren Ladungswechsel ausgesetzt ist.

2. Verfahren nach Anspruch 1, **dadurch gekennzeichnet, dass** die Anzahl der Zylinder (11, 12, ..., 18), deren Ladungswechsel ausgesetzt ist, im ersten Betriebszustand größer als im zweiten Betriebszustand gewählt wird.

3. Verfahren nach Anspruch 2, **dadurch gekennzeichnet, dass** im ersten Betriebszustand der Ladungswechsel der Hälfte der Zylinder (11, 12, ..., 18) ausgesetzt wird.

4. Verfahren nach Anspruch 3, **dadurch gekennzeichnet, dass** im ersten Betriebszustand der Ladungswechsel jedes zweiten Zylinders (11, 12, ..., 18) in der Zündreihenfolge ausgesetzt wird.

5. Verfahren nach einem der Ansprüche 2 bis 4, **dadurch gekennzeichnet, dass** im zweiten Betriebszustand der Ladungswechsel bei allen Zylindern (11, 12, ..., 18) aktiviert wird.

6. Verfahren nach einem der vorherigen Ansprüche, **dadurch gekennzeichnet, dass** bei einer Verzögerungsanforderung über einem ersten vorgegebenem Schwellwert vom ersten Betriebszustand in den zweiten Betriebszustand umgeschaltet wird.

7. Verfahren nach einem der vorherigen Ansprüche, **dadurch gekennzeichnet, dass** bei einer Verzögerungsanforderung unter einem zweiten vorgegebenem Schwellwert vom zweiten Betriebszustand in den ersten Betriebszustand umgeschaltet wird.

8. Verfahren nach Anspruch 6 und 7, **dadurch gekennzeichnet, dass** der erste vorgegebene Schwellwert und der zweite vorgegebene Schwellwert gleich groß gewählt werden.

9. Verfahren nach Anspruch 6 und 7, **dadurch gekennzeichnet, dass** der erste vorgegebene Schwellwert und der zweite vorgegebene Schwellwert unterschiedlich groß gewählt werden.

10. Vorrichtung (25) zum Betreiben einer Brennkraftmaschine (1) in einem unbefeuerten Zustand, wobei Mittel (40) zum Empfang einer Verzögerungsanforderung vorgesehen sind, **dadurch gekennzeichnet, dass** Mittel (30) vorgesehen sind, die abhängig von der Größe der Verzögerungsanforderung zwischen einem ersten Betriebszustand und einem zweiten Betriebszustand der Brennkraftmaschine (1) umschalten, wobei sich der erste Betriebszustand und der zweite Betriebszustand in der Anzahl der Zylinder (11, 12,..., 18) unterscheiden, deren Ladungswechsel ausgesetzt ist.

## Claims

1. Method for operating an internal combustion engine (1), in particular in an unfired state, with a deceleration demand being received, **characterized in that** a switch is made between a first operating state and a second operating state of the internal combustion engine (1) as a function of the magnitude of the deceleration demand, with the first operating state and the second operating state differing by the number of cylinders (11, 12, ..., 18) whose charge exchange is interrupted.

2. Method according to Claim 1, **characterized in that** the number of cylinders (11, 12, ..., 18) whose charge exchange is interrupted is selected to be greater in the first operating state than in the second operating state.

3. Method according to Claim 2, **characterized in that**, in the first operating state, the charge exchange of half of the cylinders (11, 12, ..., 18) is interrupted.

4. Method according to Claim 3, **characterized in that**, in the first operating state, the charge exchange of every second cylinder (11, 12, ..., 18) in the ignition sequence is interrupted.

5. Method according to one of Claims 2 to 4,
**characterized in that**, in the second operating state, the charge exchange in all the cylinders (11, 12, ..., 18) is activated.

6. Method according to one of the preceding claims, **characterized in that** a switch is made from the first operating state into the second operating state in the event of a deceleration demand beyond a first predefined threshold value.

7. Method according to one of the preceding claims, **characterized in that** a switch is made from the second operating state into the first operating state in the event of a deceleration demand below a second predefined threshold value.

8. Method according to Claim 6 and 7, **characterized in that** the first predefined threshold value and the second predefined threshold value are selected to be of equal magnitude.

9. Method according to Claim 6 and 7, **characterized in that** the first predefined threshold value and the second predefined threshold value are selected to be of different magnitudes.

10. Device (25) for operating an internal combustion engine (1) in an unfired state, with means (40) for receiving a deceleration demand being provided, **characterized in that** means (30) are provided which switch between a first operating state and a second operating state of the internal combustion engine (1) as a function of the magnitude of the deceleration demand, with the first operating state and the second operating state differing by the number of cylinders (11, 12, ..., 18) whose charge exchange is interrupted.

## Revendications

1. Procédé pour faire fonctionner un moteur à combustion interne (1), notamment dans l'état non chauffé, une demande de ralentissement étant reçue, **caractérisé en ce qu'**en fonction de l'ampleur de la demande de ralentissement, le moteur à combustion interne (1) est commuté entre un premier état de fonctionnement et un deuxième état de fonctionnement, le premier état de fonctionnement et le deuxième état de fonctionnement se distinguant par le nombre des cylindres (11, 12, ..., 18) pour lesquels le changement de charge est supprimé.

2. Procédé selon la revendication 1, **caractérisé en ce que** le nombre de cylindres (11, 12, ..., 18) pour lesquels le changement de charge est supprimé, est plus important dans le premier état de fonctionnement que dans le deuxième état de fonctionnement.

3. Procédé selon la revendication 2, **caractérisé en ce que** dans le premier état de fonctionnement, le changement de charge est supprimé pour la moitié des cylindres (11, 12, ..., 18).

4. Procédé selon la revendication 3, **caractérisé en ce que** dans le premier état de fonctionnement, le changement de charge est supprimé pour un cylindre sur deux (11, 12, ..., 18) dans la séquence d'allumage.

5. Procédé selon l'une quelconque des revendications 2 à 4, **caractérisé en ce que** dans le deuxième état de fonctionnement, le changement de charge est activé pour tous les cylindres (11, 12, ..., 18 ).

6. Procédé selon l'une quelconque des revendications précédentes, **caractérisé en ce que** dans le cas d'une demande de ralentissement au-delà d'une première valeur de seuil prédéfinie, on passe du premier état de fonctionnement au deuxième état de fonctionnement.

7. Procédé selon l'une quelconque des revendications précédentes, **caractérisé en ce que** dans le cas d'une demande de ralentissement en dessous d'une deuxième valeur de seuil prédéfinie, on passe du deuxième état de fonctionnement au premier état de fonctionnement.

8. Procédé selon les revendications 6 et 7, **caractérisé en ce que** la première valeur seuil prédéfinie et la deuxième valeur seuil prédéfinie sont choisies identiques.

9. Procédé selon les revendications 6 et 7, **caractérisé en ce que** la première valeur seuil prédéfinie et la deuxième valeur seuil prédéfinie sont choisies différentes.

10. Dispositif (25) pour faire fonctionner un moteur à combustion interne (1) dans un état non chauffé, dans lequel des moyens (40) pour recevoir une demande de ralentissement sont prévus, **caractérisé en ce que** des moyens (30) sont prévus, lesquels commutent le moteur à combustion interne (1) en fonction de l'ampleur de la demande de ralentissement, entre un premier état de fonctionnement et un deuxième état de fonctionnement, le premier état de fonctionnement et le deuxième état de fonctionnement se distinguant par le nombre des cylindres (11, 12, ..., 18) pour lesquels le changement de charge est supprimé.
